# EUROPÄISCHE PATENTSCHRIFT

(11) **EP 2 040 588 B1**
(45) Veröffentlichungstag und Bekanntmachung des Hinweises auf die Patenterteilung: **14.12.2011**
(21) Anmeldenummer: 07765664.3
(22) Anmeldetag: 27.06.2007
(51) Int. Cl.: A47J 31/44

(54) **VORRICHTUNG ZUM BEREITSTELLEN VON MILCHSCHAUM**
APPARATUS FOR PROVIDING MILK FROTH
DISPOSITIF POUR FOURNIR DE LA MOUSSE DE LAIT

(30) Priorität: 05.07.2006 DE 102006031064
(43) Veröffentlichungstag der Anmeldung: 01.04.2009
(73) Patentinhaber: BSH Bosch und Siemens Hausgeräte GmbH, 81739 München (DE)
(72) Erfinder: KRAMER, Siegmund, 83417 Kirchanschöring (DE)
(86) Internationale Anmeldenummer: PCT/EP2007/056410
(87) Internationale Veröffentlichungsnummer: WO 2008/003624

(56) Entgegenhaltungen:
- EP-A1- 1 312 292

## Beschreibung

Die vorliegende Erfindung betrifft eine Vorrichtung zum Bereitstellen von Milchschaum und/oder Zusatzstoffen einer Getränkezubereitungsmaschine mit einer Fluidleitung für Wasserdampf, in die an einer Einmündungsstelle eine Milchleitung und eine Luftleitung einmünden. Stromab der Einmündungsstelle ist eine Aufschäumkammer zum Aufschäumen des Wasserdampf-Milch-Luft-Gemisches angeordnet. Ohne den Schutzbereich der Erfindung einzuschränken, wird sie beispielhaft an einer Kaffeemaschine erläutert.

Derartige Milchschäumeinrichtungen, zum Beispiel die der DE 197 56 33 C2, bestehen meist aus einer Vielzahl von Einzelteilen, die zum Teil mit Dichtungselementen gegeneinander abgedichtet sind. Eine Reinigung dieser Vorrichtungen ist sehr kompliziert und umständlich, da zur gründlichen Reinigung alle Teile auseinander genommen werden müssen. Erfolgt dies nicht, besteht die Gefahr, dass verbleibende Milchreste säuern und verderben können und dadurch keine ausreichende Hygiene gewährleistet ist. Zudem können Milchreste zu einem Funktionsverlust führen. Ein weiterer Nachteil besteht darin, dass kleine Einzelteile bei der Demontage leicht verloren gehen können und die Vorrichtung dadurch unbrauchbar wird. Aus der EP 1 312 292 A1 ist eine Anordnung zur Erzeugung von Milchschaum und zum Erhitzen von Milch, mit einem Dampferzeuger, einem Milchgefäß und einem Mischelement bekannt. Das Mischelement weist einen Hauptkanal auf, der einlassseitig mit einer Einschnürung und stromabwärts davon mit einem Milcheirlasskaral verbunden ist, wobei zwischen der Einschnürung und dem Milcheinlasskanal ein zweite Dampfeinlasskanal in den Hauptkanal mündet.

Aufgabe der vorliegenden Erfindung ist es, eine alternative Vorrichtung zum Bereitstellen von Milchschaum anzugeben, bei der die oben genannten Nachteile vermieden werden.

Diese Aufgabe wird gelöst durch die Merkmale des Patentanspruchs 1, demgemäß stromauf der Einmündungsstelle eine Verzweigungskammer angeordnet ist, sodass die Fluidleitung eine Zufuhrleitung zur und eine erste Abfuhrleitung von der Verzweigungskammer ausbildet. Außerdem zweigt von der Verzweigungskammer wenigstens eine zweite Abfuhrleitung ab, und die Verzweigungskammer weist Mittel zum Umlenken der in die Verzweigungskammer eintretenden Wasserdampfströmung von der einen in die andere Abfuhrleitung auf. Schließlich ist noch die Richtung der ersten Abfuhrleitung im Bereich der Verzweigungskammer zur Richtung der zweiten Abfuhrleitung in einem Winkel (α) angeordnet, sodass die Wasserdampfströmung, die aus der Zufuhrleitung in die Verzweigungskammer eintritt, mittels einer auf die Wasserdampfströmung wirkenden Kraft von der einen in die andere Abfuhrleitung umlenkbar ist.

Im Gegensatz zum Stand der Technik enthält die erfindungsgemäße Vorrichtung keine beweglichen Teile wie Hebel oder Schalter, die mit Flüssigkeiten, insbesondere Milch, in Kontakt kommen. Das vereinfacht ihre Reinigung erheblich. Die Vorrichtung kann außerdem im Wesentlichen einstückig ausgebildet sein. Das hat den Vorteil, dass weder Spalte noch Dichtungselemente vorhanden sind, an denen die unerwünschten Ablagerungen von Milchresten auftreten können.

Das grundsätzliche Funktionsprinzip der erfindungsgemäßen Vorrichtung, insbesondere die Schaltvorgänge, die notwendig sind, um die Zufuhr von einzelnen Flüssigkeiten in die Vorrichtung zu steuern, basiert auf dem Prinzip der Fluidik. Unter "Fluidik" wird eine Technik verstanden, die Schaltungen aus Elementen aufbaut, die mit pneumatischen oder hydraulischen Strömungsvorgängen arbeiten. Auf mechanische Schaltelemente kann somit weitgehend verzichtet werden.

Für ein optimales Umlenken der Wasserdampfströmung von der einen in die andere Abfuhrleitung muss, die Richtung der ersten Abfuhrleitung im Bereich der Verzweigungskammer zur Richtung der zweiten Abfuhrleitung in einem Winkel angeordnet sein, sodass die Wasserdampfströmung, die aus der Zufuhrleitung in die Verzweigungskammer eintritt, mittels einer auf sie wirkenden Kraft von der einen in die andere Abfuhrleitung umlenkbar ist. Die Kraft kann dabei entweder "positiv" als Überdruck oder "negativ" als Unterdruck auf die Wasserdampfströmung wirken.

Nach einer vorteilhaften Ausgestaltung der Erfindung mündet in die Verzweigungskammer wenigstens eine im Wesentlichen lotrecht auf die in die Verzweigungskammer eintretende Wasserdampfströmung gerichtete Steuerleitung ein. Durch eine im Wesentlichen lotrechte oder rechtwinklige Krafteinwirkung lässt sich die maximale Wirkung beim Umlenken der Wasserdampfströmung erzielen.

Zu diesem Zweck wird bei einer weiteren vorteilhaften Ausgestaltung der Erfindung zum Umlenken ein fluidischer Strahl, im Folgenden als Umlenkstrahl bezeichnet, von der Steuerleitung abgegeben. Die Führung des Umlenkstrahls in der Steuerleitung ermöglicht eine gezielte und gleichförmige Krafteinwirkung auf die Wasserdampfströmung.

Um die gewünschte Wirkung auf die Wasserdampfströmung, nämlich die Umlenkung von einer Abfuhrleitung in die andere zu bewirken, ist es vorteilhaft, dass der Umlenkstrahl mit einem Differenzdruck gegenüber dem atmosphärischen Druck auf die Wasserdampfströmung einwirkt. Das kann, wie oben bereits beschrieben, durch einen Über- oder Unterdruck erfolgen.

Nach einer weiteren vorteilhaften Ausgestaltung der Erfindung übt der Umlenkstrahl einen Impuls auf die Wasserdampfströmung aus. Dadurch muss der in der Steuerleitung geführte Umlenkstrahl nicht dauerhaft auf die Wasserdampfströmung einwirken, um das Umlenken zu bewirken. Die Energie, die für eine dauerhafte Aufrechterhaltung des Umlenkstrahls erforderlich wäre, kann eingespart oder für andere Aufgaben verwendet werden. Ein kurzer Impuls mit entsprechender Kraftwirkung auf die Wasserdampfströmung kann nämlich bei Ausnutzung des Coanda-Effekts ausreichen. Er besagt, dass sich ein Gas- oder Flüssigkeitsstrahl an gekrümmte oder schräg zur Strömung verlaufende Oberflächen anlegt und an diesen entlang strömt. Für stationäre und reibungsfreie Strömungen kann der Coanda-Effekt auf der Grundlage der Bernoulli-Gleichung beschrieben werden. Danach tritt immer eine Kraft auf, wenn die Stromlinien in einer Strömung gekrümmt sind. Diese Kraft weist vom Krümmungszentrum weg und wächst mit der Stärke der Krümmung sowie der Geschwindigkeit der Strömung. Wird diese Möglichkeit durch eine Oberfläche beeinträchtigt, entsteht in deren Nähe ein Unterdruck, der zur Richtungsänderung der Strömung entlang der Oberfläche führt.

Um eine impulsweise Steuerung des Umlenkstrahls zu ermöglichen, ist bei einer vorteilhaften Ausführungsform der Erfindung in der Steuerleitung ein Ventil angeordnet. Der Umlenkstrahl ist bevorzugt ein pneumatischer Strahl, der beispielsweise aus Luft oder einem inerten Gas besteht. Ein pneumatischer Strahl hat den Vorteil, dass keine zusätzliche Flüssigkeit in das System eingebracht wird, die sich mit der Wasserdampfströmung mischen und diese verunreinigen kann.

Nach einer weiteren vorteilhaften Ausgestaltung der Erfindung kann der Umlenkstrahl als Teilstrom aus der Wasserdampfströmung abgezweigt werden. Bei dieser Ausführungsform kann auf eine weitere Fluidquelle für den Umlenkstrahl vollständig verzichtet werden. Der Umlenkstrahl wird aus der Wasserdampfleitung gespeist und gegebenenfalls noch unter Druck gesetzt, um den Impuls für das Umlenken der Wasserdampfströmung bereitstellen zu können. Das kann vorteilhaft durch geeignete Elemente der Strömungstechnik, wie beispielsweise eine Unterdruck- bzw. Überdruckkammer, erfolgen.

Bei einer vorteilhaften Ausgestaltung der Erfindung sind die Abfuhrleitungen und die Zufuhrleitungen in derselben Ebene angeordnet. Das ermöglicht einen im Wesentlichen flachen Aufbau der erfindungsgemäßen Vorrichtung. Eine derartige Vorrichtung mit geringer Einbautiefe hat den Vorteil, dass sie leicht in ein Gehäuse einer Kaffeemaschine integriert werden kann.

Bei einer alternativen Ausführungsform der Erfindung können die Längsachsen der Abfuhrleitungen auch mit radialem Abstand zur Längsachse der Zufuhrleitung um sie herum angeordnet sein. Eine erste Abfuhrleitung stromab der Verzweigungskammer kann sich in der gleichen Achse wie die Zufuhrleitung erstrecken. Die weiteren Abfuhrleitungen können radial mit gleichem Abstand um die erste Abfuhrleitung herum angeordnet sein. Bei dieser Ausführungsform kann die Steuerleitung ringförmig um die Verzweigungskammer herum und in Richtung einer Abfuhrleitung jeweils eine Öffnung aufweisen. Die ringförmige Anordnung mit den Öffnungen, die zur Steuerung des Umlenkstrahls jeweils ein Ventil aufweisen, kann in Form eines Multiportventils ausgeführt werden. Derartige Ventile sind aus dem Bereich der Chemie bekannt und kostengünstig.

Die Abfuhrleitungen können auch in Gruppen mit unterschiedlichem radialen Abstand z. B. koaxial um die Längsachse der Zufuhrleitung bzw. eine ersten Abfuhrleitung herum angeordnet sein. Es können also auch mehrere Abfuhrleitungen in einer Ebene radial zur Längsachse der Zufuhrleitung angeordnet sein. Diese Ausführungsformen bieten eine große Anzahl von Anordnungsmöglichkeiten, die an die jeweiligen Platzverhältnisse flexibel angepasst werden können.

Nachfolgend wird das Prinzip der Erfindung anhand von schematisch dargestellten Ausführungsbeispielen näher erläutert. In der Zeichnung zeigen:
- Figur 1: eine erste Ausführungsform der erfindungsgemäßen Vorrichtung und
- Figur 2: eine zweite Ausführungsform, jeweils in einem Vertikalschnitt, und
- Figur 3: eine dritte Ausführungsform der Erfindung in einem Horizontalschnitt.

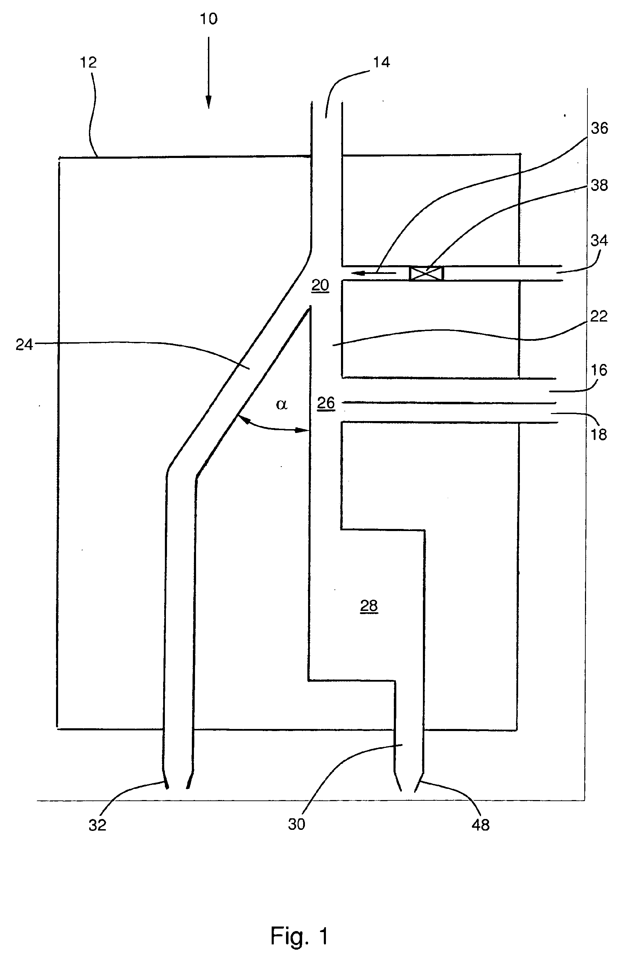

Figur 1 zeigt eine erfindungsgemäße Vorrichtung 10 mit einem Gehäuse 12. In das Gehäuse 12 führt einer Wasserdampfzuleitung 14, die in eine Verzweigungskammer 20 mündet. Außerdem mündet in die Verzweigungskammer 20 lotrecht zur Wasserdampfleitung 14 eine Steuerleitung 34, in der ein Ventil 38 angeordnet ist. In der Steuerleitung 34 wird ein Fluid zur Bildung eines Umlenkstrahls 36 geführt. Von der Verzweigungskammer 20 zweigen eine erste Abfuhrleitung 22 und eine zweite Abfuhrleitung 24 ab. Die Abfuhrleitung 22 und die Abfuhrleitung 24 liegen in einem Winkel α zueinander. Stromab der Verzweigungskammer 20 ist in der Abfuhrleitung 22 eine Einmündungsstelle 26 angeordnet, an der eine Milchzuleitung 16 und eine Luftzuleitung 18 in die erste Abfuhrleitung 22 münden. Stromab der Einmündungsstelle 26 mündet die Abfuhrleitung 22 in eine Aufschäumkammer 28, an die sich stromab eine Milchschaumableitung 30 mit einer Milchschaumdüse 48 an deren Ende anschließt. Das Ende der zweiten Abfuhrleitung 24 bildet eine Wasserdampfdüse 32, die - wie auch die Milchschaumdüse 48 - außerhalb des Gehäuses 12 angeordnet ist.

Mit der in Figur 1 dargestellten Vorrichtung 10 lassen sich zwei Betriebszustände realisieren, nämlich zum einen ein Milchschäumbetrieb und zum anderen ein Wasserdampfbetrieb. Im Milchschäumbetrieb strömt Wasserdampf durch die Wasserdampfzuleitung 14 in die Verzweigungskammer 20. Aufgrund der koaxialen Anordnung der Wasserdampfzuleitung 14 und der Abfuhrleitung 22 strömt der Wasserdampf durch die Verzweigungskammer 20 direkt weiter in die erste Abfuhrleitung 22. Die Abfuhrleitung 24 bleibt im Milchschäumbetrieb frei von Wasserdampf. Der Wasserdampf strömt ausschließlich durch die Abfuhrleitung 22 vorbei an der Einmündungsstelle 26 und erzeugt nach dem Prinzip der "Vakuumpumpe" einen leichten Unterdruck in der Milchzuleitung 16 und der Luftzuleitung 18. Er saugt also aus der Milchzuleitung 16 Milch und aus der Luftzuleitung 18 Luft in Richtung der Abfuhrleitung 22 an. An der Einmündungsstelle 26 bildet sich daraufhin ein Wasserdampf-Milch-Luft-Gemisch, das stromab der Einmündungsstelle 26 in die Aufschäumkammer 28 strömt. Die Aufschäumkammer 28 bietet dem Wasserdampf-Milch-Luft-Gemisch aufgrund ihrer Größe und Form die Möglichkeit zu expandieren, wodurch sich der gewünschte Milchschaum bildet. Der Milchschaum verlässt die Aufschäumkammer 28 durch die Milchschaumableitung 30 und gelangt durch die Milchschaumdüse 48 beispielsweise in eine Kaffeetasse.

Im Wasserdampfbetrieb strömt ebenfalls Wasserdampf durch die Wasserdampfzuleitung 14 in die Verzweigungskammer 20. Gleichzeitig strömt aus der Steuerleitung 34 der Umlenkstrahl 36 mit Überdruck in die Verzweigungskammer 20 ein und trifft lotrecht auf die Wasserdampfströmung. Der Umlenkstrahl 36 lenkt die Wasserdampfströmung von der Abfuhrleitung 22 weg in die Abfuhrleitung 24. Die Größe des Winkels α liegt dabei in einem Bereich, der das Umlenken der Wasserdampfströmung in die Abfuhrleitung 24 strömungstechnisch ermöglicht. Bei dem Umlenkstrahl 36 handelt es sich um einen Luftstrahl, der mit einem Differenzdruck gegenüber dem atmosphärischen Druck auf die Wasserdampfströmung einwirkt. Auf diese Weise übt der Umlenkstrahl 36 eine Kraft auf die Wasserdampfströmung aus, sodass diese ihre strömungstechnisch bedingte Richtung von der Wasserdampfzuleitung 14 in die Abfuhrleitung 22 ändert und von der Wasserdampfzuleitung 14 vollständig in die Abfuhrleitung 24 strömt.

Dazu muss der Umlenkstrahl 36 nicht dauerhaft auf die Wasserdampfströmung wirken, ein kurzer Impuls mit entsprechender Kraft reicht zum Umlenken aus. Wenn die Wasserdampfströmung einmal in die Abfuhrleitung 24 umgelenkt ist, bleibt dieser Zustand aufgrund aufgrund des Coanda-Effektes erhalten, bis die Wasserdampfströmung abreißt.

Damit der Umlenkstrahl 36 in Form eines Impulses auf die Wasserdampfströmung einwirken kann, ist in der Steuerleitung 34 ein Ventil 38 angeordnet. Mit diesem ist es möglich, die mit Druck beaufschlagte Luft in der Steuerleitung 34 impulsweise auf die Wasserdampfströmung einwirken zu lassen. Ein Impuls wird dabei durch ein kurzzeitiges Öffnen des Ventils 38 bewirkt.

Das für die Bildung des Umlenkstahls 36 benötigte Fluid kann auch aus der Wasserdampfzuleitung 14 als Teilstrom der Wasserdampfströmung abgezweigt werden (in Figur 1 nicht dargestellt). Der Teilstrom strömt dann in die Steuerleitung 34 ein und kann als Umlenkstrahl 36 dauerhaft oder als Impuls auf den Wasserdampfhauptstrom einwirken. Das ist möglich, da auch der Wasserdampf in der Wasserdampfzuleitung 14 unter Druck der Vorrichtung 10 zugeführt wird.

Zur weiteren Vereinfachung der Vorrichtung 10 kann das Ventil 38 auch außerhalb des Gehäuses 12 angeordnet sein. Dadurch vereinfachen sich der Aufbau und folglich auch die Reinigung der Vorrichtung.

Alle Leitungen 14, 16, 18, 22, 24, 30, 34 und Kammern 20, 26, 28 sind in ein und derselben Ebene angeordnet. Das ermöglicht einen flachen Aufbau der Vorrichtung 10. Sie hat damit eine geringe Einbautiefe und kann leicht in ein Gehäuse einer Kaffeemaschine integriert werden.

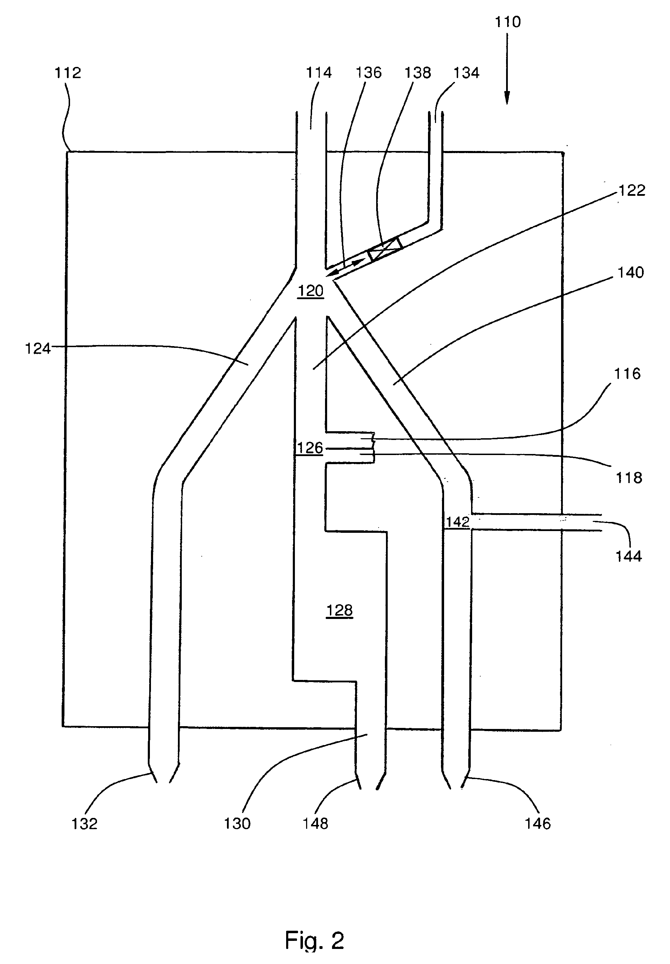

Figur 2 zeigt eine weitere Ausführungsform einer erfindungsgemäßen Vorrichtung 110, bei der im Unterschied zu der in Figur 1 dargestellten Vorrichtung 10 von einer Verzweigungskammer 120 neben einer ersten Abfuhrleitung 122 und einer zweiten Abfuhrleitung 124 eine dritte Abfuhrleitung 140 abzweigt. Stromab der Verzweigungskammer 120 weist die dritte Abfuhrleitung 140 eine Einmündungsstelle 142 auf, an der eine Zuleitung 144 für Zusatzstoffe einmündet. Das Ende der dritten Abfuhrleitung 140 bildet eine Düse 146, die ebenso wie eine Wasserdampfdüse 132, die das Ende der zweiten Abfuhrleitung 124 bildet, außerhalb eines Gehäuses 112 angeordnet ist. Im Übrigen umfasst die Vorrichtung 110 mit der Wasserdampfzuleitung 114, der Milchzuleitung 116 und der Luftzuleitung 118 an einer Einmündungsstelle 126 stromab der Verzweigungskammer 120, und der Steuerleitung 134, die ein Ventil 138 aufweist, die gleichen Bauelemente und Funktionen wie die Vorrichtung gemäß Figur 1. Wie gehabt fließt das Wasserdampf-Milch-Luft-Gemisch in eine Aufschäumkammer 128, in der durch Expansion des Gemisches Milchschaum gebildet wird, der dann durch eine Milchschaumableitung 130 und eine Düse 148 z. B. in eine Kaffeetasse geleitet werden kann.

Im Unterschied zu der in Figur 1 dargestellten Vorrichtung 10 kann mit der in Figur 2 gezeigten Vorrichtung 110 zusätzlich zum Milchschäumbetrieb und Wasserdampfbetrieb auch ein Zusatzstoffbetrieb, beispielsweise zur Zuführung von Aromastoffen, realisiert werden. Dazu führt die Wasserdampfzuleitung 114 Wasserdampf der Verzweigungskammer 120 zu. Der Umlenkstrahl 136 kann die Wasserdampfströmung wahlweise in die zweite Abfuhrleitung 124 (Wasserdampfbetrieb) oder in die dritte Abfuhrleitung 140 (Zusatzstoffbetrieb) umlenken. Um die Wasserdampfströmung aus der Wasserdampfzuleitung 114 in die zweite Abfuhrleitung 124 umzulenken, trifft der Umlenkstrahl 136 in der Verzweigungskammer 120 mit Überdruck auf die Wasserdampfströmung. Im Gegensatz dazu übt der Umlenkstrahl 36 bei der Umlenkung der Wasserdampfströmung aus der Wasserdampfzuleitung 114 in die dritte Abfuhrleitung 140 in der Verzweigungskammer 120 einen negativen Impuls (Unterdruck) auf die Wasserdampfströmung aus. Dazu kann in der Steuerleitung 134 sowohl ein Überdruck als auch ein Unterdruck erzeugt werden. Die Kraft des Umlenkstrahls 136 wird mittels des Ventils 138 impulsweise an die Wasserdampfströmung weitergegeben.

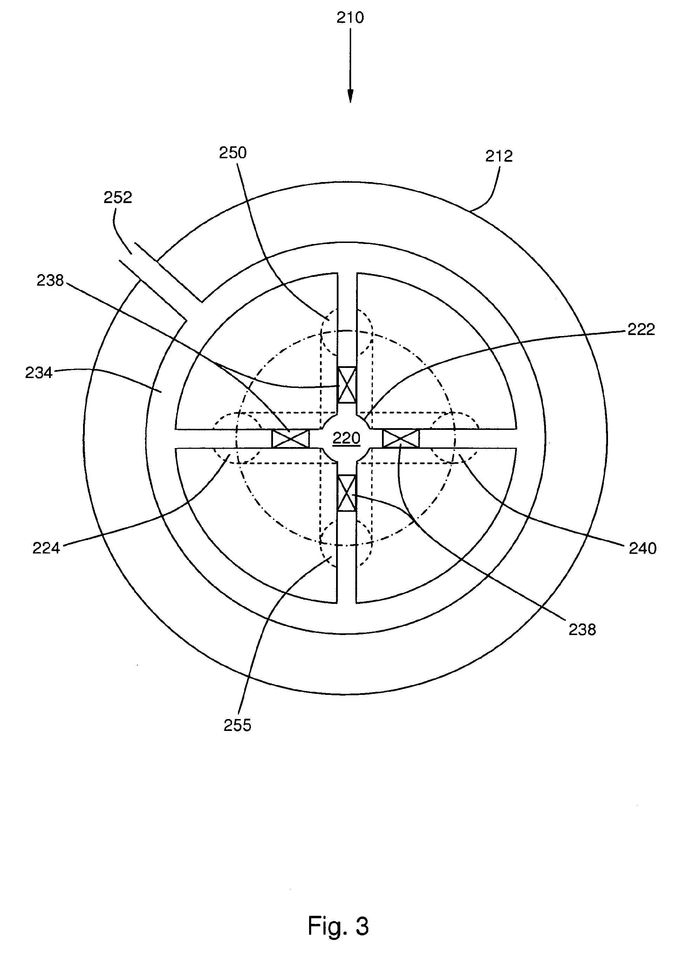

Bei einer größeren Anzahl von Abfuhrleitungen ist auch eine Ausführungsform denkbar, bei der die Abfuhrleitungen stromab einer Verzweigungskammer nicht in derselben Ebene, sondern räumlich angeordnet sind. Ein Beispiel für eine derartige Ausführungsform ist grob schematisch in Figur 3 dargestellt. Sie zeigt ein Gehäuse 212 einer Vorrichtung 210 in einer horizontalen Schnittebene durch eine Verzweigungskammer 220. Die Ansicht zeigt eine Blickrichtung von oben aus der Sicht des in die Verzweigungskammer 220 strömenden Wasserdampfs. Von der Verzweigungskammer 220 zweigt in Verlängerung der Wasserdampfzuleitung die erste Abfuhrleitung 222 ab. Vier weitere Abfuhrleitungen 224, 240, 250 und 255 sind koaxial um die Abfuhrleitung 222 herum angeordnet. Um die Verzweigungskammer 220 herum verläuft eine ringförmige Steuerleitung 234. Sie weist jeweils an bzw. gegenüber einer der Abfuhrleitungen 224, 240, 250 und 255 eine Verbindung zur Verzweigungskammer 220 auf. In jeder dieser Verbindungen ist ein Ventil 238 angeordnet. Die Steuerleitung 234 wird über einen Anschluss 252 mit einem unter Druck stehenden Fluid versorgt. Je nachdem, in welche der vier Abfuhrleitungen 224, 240, 250 oder 255 die Wasserdampfströmung abgelenkt werden soll, wird bei Überdruck in der Steuerleitung 234 das der Abfuhrleitung gegenüberliegende Ventil 238 kurzzeitig geöffnet, um einen Impuls auf die Wasserdampfströmung auszuüben und sie damit in eine der vier Abfuhrleitungen 224, 240, 250 oder 255 umzulenken. Entsprechend kann auch Unterdruck zum Umlenken verwendet werden. Die einzelnen Abfuhrleitungen 224, 240, 250 und 255 können zur Bereitstellung von Wasserdampf oder verschiedenen Zusatzstoffen dienen. Die Abfuhrleitung 222 mit einer stromab dazu angeordneten Einmündungsstelle für Milch und Luft sowie einer Aufschäumkammer dient wie auch in der ersten beiden Ausführungsformen zum Milchaufschäumen.

Bei allen drei in den Figuren 1 bis 3 dargestellten Ausführungsformen kann auch für den Milchschäumbetrieb auf die Luftzuleitung in die Abfuhrleitung 22, 122, 222 verzichtet werden, wenn der Umlenkstrahl 36, 136 in Form von Druckluft nicht impulsweise, sondern stetig der Wasserdampfströmung zugeführt wird. Die Luftzufuhr über die Steuerleitung 34, 134, 234 hat in diesem Fall eine Doppelfunktion: Sie kann wahlweise nur zur Beimischung von Luft zur Wasserdampfströmung oder zusätzlich in Form eines Umlenkstrahls zum Umlenken der Wasserdampfströmung aus der einen in die andere Abfuhrleitung dienen. Dazu kann der Druck in der Steuerleitung 34, 134, 234 mittels des Ventils 38, 138, 238 gesteuert werden

Die Gehäuseform der drei zuvor beschriebenen Vorrichtungen 10, 110 und 210 kann je nach Einsatz der Vorrichtung oder Anordnung der Abfuhrleitungen variieren. Dabei kann das Gehäuse 12, 112, wie in den Figuren 1 und 2 dargestellt, eher kastenförmig und flach oder, wie in Figur 3 (Gehäuse 212) gezeigt, rohrförmig sein.

### Bezugszeichenliste:

- 10, 110, 210 -: Vorrichtung
- 12, 112, 212 -: Gehäuse
- 14, 114 -: Wasserdampfzuleitung
- 16, 116 -: Milchzuleitung
- 18, 118 -: Luftzuleitung
- 20, 120, 220 -: Verzweigungskammer
- 22, 24, 122, 124, 140, 222, 224, 240, 250, 255 -: Abfuhrleitung
- 26, 126, 142 -: Einmündungsstelle
- 28, 128 -: Aufschäumkammer
- 30, 130 -: Milchschaumableitung
- 32, 132 -: Wasserdampfdüse
- 34, 134, 234 -: Steuerleitung
- 36, 136 -: Umlenkstrahl
- 38, 138, 238 -: Ventil
- 144 -: Zuführleitung für Zusatzstoffe
- 48, 148 -: Milchschaumdüse
- 146 -: Düse
- 252 -: Zuführleitung für Druckluft

## Patentansprüche

1. Vorrichtung (10, 110, 210) für eine Getränkezubereitungsmaschine zum Bereitstellen von Milchschaum und/oder Zusatzstoffen, mit einer Fluidleitung für Wasserdampf, in die an einer Einmündungsstelle (26, 126) eine Milchleitung (16, 116) und eine Luftleitung (18, 118) einmünden, und mit einer stromab der Einmündungsstelle (26, 126) angeordneten Aufschäumkammer (28, 128) zum Aufschäumen des Wasserdampf-Milch-Luft-Gemisches, wobei stromauf der Einmündungsstelle (26, 126) eine Verzweigungskammer (20, 120, 220) angeordnet ist, sodass die Fluidleitung eine Zufuhrleitung (14, 114) zur und eine erste Abfuhrleitung (22, 122, 222) von der Verzweigungskammer (20, 120, 220) ausbildet, dass von der Verzweigungskammer (20, 120, 220) wenigstens eine zweite Abfuhrleitung (24, 124, 224) abzweigt, und dass die Verzweigungskammer (20, 120, 220) Mittel zum Umlenken der in die Verzweigungskammer (20, 120, 220) eintretenden Wasserdampfströmung von der einen in die andere Abfuhrleitung aufweist, **dadurch gekennzeichnet, dass** die Richtung der ersten Abfuhrleitung (22, 122, 222) im Bereich der Verzweigungskammer (20, 120, 220) zur Richtung der zweiten Abfuhrleitung (24, 124, 224) in einem Winkel (α) angeordnet ist, so dass die Wasserdampfströmung, die aus der Zufuhrleitung (14, 114) in die Verzweigungskammer (20, 120, 220) eintritt, mittels einer auf die Wasserdampfströmung wirkenden Kraft von der einen in die andere Abfuhrleitung umlenkbar ist.

2. Vorrichtung (10, 110, 210) nach Anspruch 1, **dadurch gekennzeichnet, dass** in die Verzweigungskammer (20, 120, 220) wenigstens eine im Wesentlichen lotrecht auf die in die Verzweigungskammer (20, 120, 220) eintretende Wasserdampfströmung gerichtete Steuerleitung (34, 134, 234) einmündet.

3. Vorrichtung (10, 110, 210) nach Anspruch 2, **dadurch gekennzeichnet, dass** die Steuerleitung (34, 134, 234) einen fluidischen Umlenkstrahl (36, 136) zum Umlenken abgibt.

4. Vorrichtung (10, 110, 210) nach Anspruch 3, **dadurch gekennzeichnet, dass** der Umlenkstrahl (36, 136) mit einem Differenzdruck gegenüber dem atmosphärischen Druck auf die Wasserdampfströmung einwirkt.

5. Vorrichtung (10, 110, 210) nach Anspruch 3 oder 4, **dadurch gekennzeichnet, dass** der Umlenkstrahl (36, 136) einen Impuls auf die Wasserdampfströmung ausübt.

6. Vorrichtung (10, 110, 210) nach einem der Ansprüche 3 bis 5, **dadurch gekennzeichnet, dass** in der Steuerleitung (34, 134, 234) ein Ventil (38, 138, 238) zur impulsweisen Steuerung des Umlenkstrahls (36, 136) angeordnet ist.

7. Vorrichtung (10, 110, 210) nach einem der Ansprüche 3 bis 6, **dadurch gekennzeichnet, dass** der Umlenkstrahl (36, 136) ein Teilstrom aus der Wasserdampfströmung ist.

8. Vorrichtung (10, 110, 210) nach einem der vorhergehenden Ansprüche, **dadurch gekennzeichnet, dass** die Zufuhrleitung (14, 114) und die Abfuhrleitungen (22, 24, 122, 124, 140) in einer Ebene angeordnet sind.

9. Vorrichtung (10, 110, 210) nach einem der vorhergehenden Ansprüche, **dadurch gekennzeichnet, dass** die Abfuhrleitungen (224, 240, 250, 255) stromab der Verzweigungskammer (220) mit radialem Abstand um eine Längsachse der Zufuhrleitung herum angeordnet sind.

## Claims

1. Device (10, 110, 210) for a beverage preparing machine for preparing milk foam and/or additives, with a fluid duct for water steam into which a milk duct (16, 116) and an air duct (18, 118) open at an opening point (26, 126), and with a foaming chamber (28, 128), which is arranged downstream of the opening point (26, 126) for foaming of the water-steam/milk/air mixture, wherein a branch chamber (20, 120, 220) is arranged upstream of the opening point (26, 126) so that the fluid duct forms a feed duct (14, 114) to and a first discharge duct (22, 122, 222) from the branch chamber (20, 120, 220), that at least one second discharge duct (24, 124, 224) branches off the branch chamber (20, 120, 220) and that the branch chamber (20, 120, 220) has means for deflecting the water-steam flow, which enters the branch chamber (20, 120, 220), from one to the other discharge duct, **characterised in that** the direction of the first discharge duct (22, 122, 222) in the region of the branch chamber (20, 120, 220) is arranged at an angle (α) to the direction of the second discharge duct (24, 124, 224) so that the water-steam flow entering from the feed duct (14, 114) into the branch chamber (20, 120, 220) is deflectable from one to the other discharge duct by means of a force acting on the water-steam flow.

2. Device (10, 110, 210) according to claim 1, **characterised in that** at least one control duct (34, 134, 234) oriented substantially vertically onto the water-steam flow entering the branch chamber (20, 120, 220) opens into the branch chamber (20, 120, 220).

3. Device (10, 110, 210) according to claim 2, **characterised in that** the control duct (34, 134, 234) delivers a fluid deflecting jet (36, 136) for the deflecting.

4. Device (10, 110, 210) according to claim 3, **characterised in that** the deflecting jet (36, 136) acts on the water-steam flow with a pressure difference by comparison with atmospheric pressure.

5. Device (10, 110, 210) according to claim 3 or 4, **characterised in that** the deflecting jet (36, 136) exerts a pulse on the water-steam flow.

6. Device (10, 110, 210) according to any one of claims 3 to 5, **characterised in that** a valve (38, 138, 238) for pulsed control of the deflecting jet (36, 136) is arranged in the control duct (34, 134, 234).

7. Device (10, 110, 210) according to any one of claims 3 to 6, **characterised in that** the deflecting jet (36, 136) is a sub-flow from the water-steam flow.

8. Device (10, 110, 210) according to any one of the preceding claims, **characterised in that** the feed duct (14, 114) and the discharge ducts (22, 242, 122, 124, 140) are arranged in a plane.

9. Device (10, 110, 210) according to any one of the preceding claims, **characterised in that** the discharge ducts (224, 240, 250, 255) are arranged downstream of the branch chamber (220) at a radial spacing around a longitudinal axis of the feed duct.

## Revendications

1. Dispositif (10, 110, 210) pour une machine de préparation de boissons, destiné à fournir de la mousse de lait et/ou des additifs, comprenant une conduite de fluide pour de la vapeur d'eau, dans laquelle débouchent une conduite de lait (16, 116) et une conduite d'air (18, 118) à un point d'embouchure (26, 126), et comprenant une chambre de moussage (28, 128) disposée en aval du point d'embouchure (26, 126) destinée à faire mousser le mélange vapeur d'eau-lait-air, une chambre d'embranchement (20, 120, 220) étant disposée en amont du point d'embouchure (26, 126) de sorte que la conduite de fluide forme une conduite d'alimentation (14, 114, 124) vers la chambre d'embranchement (20, 120, 220) et une première conduite d'évacuation (22, 122, 222) en provenance de la chambre d'embranchement (20, 120, 220), qu'au moins une deuxième conduite d'évacuation (24, 124, 224) dérive de la chambre d'embranchement (20, 120, 220) et que la chambre d'embranchement (20, 120, 220) présente des moyens pour dévier le courant de vapeur d'eau entrant dans la chambre d'embranchement (20, 120, 220) d'une conduite d'évacuation à l'autre, **caractérisé en ce que** la direction de la première conduite d'évacuation (22, 122, 222) dans la zone de la chambre d'embranchement (20, 120, 220) est disposée dans un angle (α) par rapport à la direction de la deuxième conduite d'évacuation (24, 124, 224) de sorte que le courant de vapeur d'eau qui entre dans la chambre d'embranchement (20, 120, 220) à partir de la conduite d'alimentation (14, 114) peut être dévié d'une conduite d'évacuation à l'autre au moyen d'une force agissant sur le courant de vapeur d'eau.

2. Dispositif (10, 110, 210) selon la revendication 1, **caractérisé en ce qu'**au moins une conduite de commande (34, 134, 234) dirigée essentiellement perpendiculairement sur le courant de vapeur d'eau entrant dans la chambre d'embranchement (20, 120, 220) débouche dans la chambre d'embranchement (20, 120, 220).

3. Dispositif (10, 110, 210) selon la revendication 2, **caractérisé en ce que** la conduite de commande (34, 134, 234) décharge un jet de renvoi fluidique (36, 136) pour la déviation.

4. Dispositif (10, 110, 210) selon la revendication 3, **caractérisé en ce que** le jet de renvoi (36, 136) agit sur le courant de vapeur d'eau avec une pression différentielle par rapport à la pression atmosphérique.

5. Dispositif (10, 110, 210) selon la revendication 3 ou 4, **caractérisé en ce que** le jet de renvoi (36, 136) exerce une impulsion sur le courant de vapeur d'eau.

6. Dispositif (10, 110, 210) selon l'une quelconque des revendications 3 à 5, **caractérisé en ce qu'**une soupape (38, 138, 238) est disposée dans la conduite de commande (34, 134, 234) pour la commande par impulsions du jet de renvoi (36, 136).

7. Dispositif (10, 110, 210) selon l'une quelconque des revendications 3 à 6, **caractérisé en ce que** le jet de renvoi (36, 136) est un courant partiel provenant du courant de vapeur d'eau.

8. Dispositif (10, 110, 210) selon l'une quelconque des revendications précédentes, **caractérisé en ce que** la conduite d'alimentation (14, 114) et les conduites d'évacuation (22, 24, 122, 124, 140) sont disposées dans un plan.

9. Dispositif (10, 110, 210) selon l'une quelconque des revendications précédentes, **caractérisé en ce que** les conduites d'évacuation (224, 240, 250, 255) sont disposées en aval de la chambre d'embranchement (220) avec écart radial autour d'un axe longitudinal de la conduite d'alimentation.
